# FASCICULE DE BREVET EUROPEEN

(11) **EP 0 629 937 B1**
(45) Date de publication et mention de la délivrance du brevet: **29.07.1998**
(21) Numéro de dépôt: 94401216.0
(22) Date de dépôt: 02.06.1994
(51) Int. Cl.: G05D 16/10

(54) **Ensemble de commande de distribution de gaz et bouteille de gaz équipée d'un tel ensemble**
Steuereinheit für Gasverteilung und Flasche ausgestattet mit solcher Einheit
Control unit for gas distribution and bottle provided with such unit

(30) Priorité: 03.06.1993 FR 9306646
(43) Date de publication de la demande: 21.12.1994
(60) Demande divisionnaire: 97403086.8
(73) Titulaire: TAEMA, F-92182 Antony Cédex (FR)
(72) Inventeur: Lhomer, Gérard, F-78320 Le Mesnil Saint Denis (FR); Theurant, Gilbert, F-94400 Vitry sur Seine (FR)
(74) Mandataire: Le Moenner, Gabriel

(56) Documents cités:
- AU-A- 28 732
- US-A- 4 572 477
- US-A- 4 586 634
- US-A- 4 782 861

## Description

L'invention concerne un ensemble de commande et de distribution de gaz, destiné à être raccordé à un réservoir contenant ledit gaz sous une haute pression, comportant une sortie basse pression et, en série entre le réservoir et la sortie basse pression, un clapet d'isolation exposé à la haute pression, un moyen détendeur de pression couplable au clapet d'isolation, et un moyen régulateur de débit.

La présente invention a pour objet de proposer un tel ensemble de commande et de distribution se présentant sous une forme unitaire, compacte et ergonomique, typiquement monté à demeure sur le réservoir ou la bouteille de gaz et offrant toutes les fonctionnalités et les sécurités requises, tant pour la distribution de gaz que pour le remplissage du réservoir.

Pour ce faire, selon un aspect de l'invention, la sortie basse pression, le moyen régulateur de débit et le moyen détendeur de pression sont assemblés dans un premier sous-ensemble mobile disposé dans une structure de commande et d'actionnement solidarisée à un deuxième sous-ensemble incorporant le clapet d'isolation et étant destiné à être monté sur le réservoir.

Selon d'autres caractéristiques de l'invention :
- le premier sous-ensemble comporte une deuxième sortie de gaz à moyenne pression en amont du moyen régulateur de débit ;
- le moyen détendeur de pression est disposé dans un premier bloc coopérant à coulissement avec une première extrémité du deuxième sous-ensemble et comprenant une portion de tige creuse coopérant sélectivement avec le clapet d'isolation;
- le moyen régulateur de pression comprend un moyen de piston porte-clapet coulissant dans le premier bloc et coopérant avec un siège de clapet formé par ce premier bloc;
- le moyen régulateur de débit et la sortie basse pression sont disposés dans un deuxième bloc monté sur le premier bloc;
- la structure de commande et d'actionnement comporte un organe tubulaire renfermant le premier sous-ensemble et présentant, dans sa paroi latérale, une première et une deuxième découpes au travers desquelles s'étendent, avantageusement du même côté du premier sous-ensemble, les sorties basse pression et moyenne pression, respectivement, la deuxième découpe formant typiquement un profil de came coopérant avec la sortie moyenne pression pour déplacer axialement le premier sous-ensemble en réponse à une rotation de l'organe tubulaire.

La présente invention concerne également une bouteille de gaz équipée à demeure d'un tel ensemble unitaire.

D'autres caractéristiques et avantages de la présente invention ressortiront de la description suivante d'un mode de réalisation, donnée à titre illustratif mais nullement limitatif, faite en relation avec les dessins annexés, sur lesquels :
- la figure 1 représente, en coupe longitudinale, un ensemble de commande et de distribution de gaz selon l'invention monté en place sur une bouteille de gaz ; et
- la figure 2 est une vue de côté de l'ensemble pourvu d'un volet de sécurité représenté en pointillés sur la figure 1.

Dans les modes de réalisation représentés, un ensemble selon l'invention comprend typiquement un bloc inférieur, généralement désigné par la référence 1, comportant une extrémité inférieure tronconique filetée 2 pour son montage dans l'ouverture taraudée 3 d'un col de bouteille de gaz 4, par exemple une bouteille d'oxygène médical sous pression. Le bloc inférieur 1 comporte un alésage 5 s'étendant sur la majeure partie de la longueur du bloc 1 et débouchant vers le bas, dans lequel est disposé un clapet d'isolation 6 et son ressort 7 sollicitant normalement le clapet 6 dans une position de fermeture empêchant l'évacuation vers l'extérieur du gaz dans la bouteille 4. Dans l'alésage 5, débouchent un premier alésage étagé transversal 8 servant au montage d'un manomètre indicatif de la pression dans la bouteille 4, et un deuxième alésage étagé transversal 10 servant au montage d'un raccord de remplissage 11 renfermant un clapet anti-retour 12 et comportant avantageusement un alésage d'entrée taraudé 13 servant à recevoir un raccord rapide à griffes filetées extérieurement et muni de moyens (par exemple alésage d'entrée de diamètre inférieur à celui de l'alésage taraudé 13) empêchant l'utilisation d'un autre raccord que le raccord à griffes spécifiques. La partie supérieure du bloc 1 comporte un alésage 14, une gorge périphérique 15 et forme une jupe d'extrémité terminée par un biseau comportant deux fentes axiales diamétralement opposées 55₁ et 55₂.

Dans l'alésage 14 est reçue une extrémité en forme de jupe d'un bloc intermédiaire cylindrique 17 abritant un ressort 18 prenant appui sur le fond de l'alésage 14 et qui comprend une portion de tige creuse centrale 19 définissant un passage central 20 et s'étendant vers le bas dans un alésage central de diamètre réduit 21 du bloc 1 dans lequel s'étend également une portion de tige creuse avant du clapet d'isolation 6. Le passage 20 débouche vers le haut dans une petite protubérance tronconique formant siège de clapet 22 dans le fond d'un alésage central élargi 23 du bloc 17, dans lequel débouchent deux alésages transversaux en vis-à-vis 24 et 25. L'extrémité supérieure du bloc 17 s'évase en forme de jupe formant un alésage supérieur 26 dans lequel est monté à coulissement étanche un piston 27 comportant une tige centrale 28 reçue à coulissement étanche dans l'alésage 23 et portant à son extrémité une garniture de clapet 29 destinée à coopérer avec le siège 22. La face supérieure du piston 27 est exposée à la pression régnant dans la partie inférieure de l'alésage 23 par un passage intérieur 30 s'étendant dans la tige 28, le piston 27 étant sollicité à l'écart du siège 22 par un ressort taré 31 prenant appui dans le fond de l'alésage 26.

L'alésage 26 est fermé, à sa partie supérieure, par un bloc supérieur 32 monté de façon étanche sur le bloc intermédiaire 17 au moyen d'un écrou 33. Dans un logement cylindrique à l'extrémité inférieure du bloc 32 est disposé un disque 34 pourvu d'une série de trous traversants 35 de dimensions différentes et angulairement répartis. Le disque 34 est déplaçable angulairement par rapport au bloc supérieur 32 par un dispositif d'actionnement manuel comportant une tige centrale 36 traversant axialement de façon étanche le bloc 32, couplée en rotation au disque 34 et dont l'extrémité supérieure est solidaire d'un organe d'actionnement, typiquement un voile diamétral d'extrémité 37 solidaire d'un disque d'indexage 38 surplombant le bloc 32 et comportant, dans sa face inférieure, une série de logements angulairement répartis 39 destinés à coopérer avec une bille 40 sollicitée élastiquement vers l'extérieur montée dans le bloc 32. Avantageusement, le bloc 32 porte, à son extrémité supérieure, un disque indicateur 41 parallèle au disque 38 et portant des repères angulairement répartis, visibles grâce à une lumière 42 ménagée dans le disque 38. Le bloc supérieur 32 comporte un passage axial 43 débouchant dans le logement du disque 34 et avec lequel communique un alésage transversal 44 servant au montage d'un raccord de sortie basse pression 45, typiquement une olive crantée.

Le sous-ensemble constitué par les blocs 17 et 32 est disposé dans un organe tubulaire 46 comprenant une partie supérieure 47, conformée avec des crans pour en faciliter l'actionnement et abritant le disque 42 et son voile d'actionnement 37, et une extrémité inférieure constituée par une série de griffes axiales 48 angulairement réparties comportant chacune une protubérance intérieure à profil intérieur tronconique destinée à coopérer avec l'extrémité tronconique en forme de rampe 16 du bloc inférieur 1 pour le montage de l'organe tubulaire 46 sur le bloc inférieur 1 par engagement à demeure des griffes 48 dans la gorge périphérique 15 afin de solidariser ainsi de façon indémontable l'organe tubulaire 46 et son sous-ensemble intérieur au bloc inférieur 1, tout en permettant à l'organe tubulaire 46 de tourner par rapport au bloc 1, autour de leur axe commun.

L'organe tubulaire 46 comporte, dans sa paroi latérale, une découpe supérieure 49 au travers de laquelle s'étend librement le raccord basse pression 45, ainsi que deux découpes ou lumières symétriques en vis-à-vis 50₁ et 50₂ présentant chacune un profil de came transversal et ayant une extension axiale adaptée au diamètre d'une portion intermédiaire d'un raccord moyenne pression 51 et d'un dispositif de clapet de surpression 52, respectivement, monté en vis-à-vis dans les alésages transversaux 24 et 25 du bloc intermédiaire 17 et traversant les lumières 50₁ et 50₂ de l'organe d'actionnement tubulaire 46 et les fentes axiales 55₁ et 55₂ de la jupe d'extrémité supérieure du bloc 1. Le raccord moyenne pression 51 comporte typiquement un clapet anti-retour 53 qui est repoussé lors d'un raccordement à une canalisation d'utilisation.

Le fonctionnement de l'ensemble qui vient d'être décrit est le suivant :

A partir de la position normale de fermeture représentée sur la figure, l'organe tubulaire 46 est actionné en rotation par rapport au reste de l'ensemble de façon à provoquer, par coopération entre les surfaces de came des découpes 50₁ et 50₂ et les raccords associés 51 et 52, un déplacement vers le bas, à l'encontre du ressort 18, du sous-ensemble constitué par les blocs 17 et 32. Ce déplacement provoque l'ouverture du clapet d'isolation 6, repoussé par la portion de tige centrale 19 du bloc inférieur 17. La haute pression régnant dans la bouteille 4, par exemple de l'ordre de 200 x 10⁵ Pa, est ramenée, dans la partie inférieure de l'alésage 23, à une moyenne pression, par exemple de l'ordre de 3,5 x 10⁵ Pa pour les applications médicales, par le piston détendeur 27, en fonction de la force de tarage du ressort 31. L'utilisateur dispose donc, en sortie du raccord 51, d'un gaz à une moyenne pression disponible à un débit important, par exemple de l'ordre de 50 à 60 litres/minute pour les applications médicales. Parallèlement, en fonction de l'orifice 35 sélectionné par rotation du disque 34, l'utilisateur dispose, au raccord de sortie basse pression 45, d'une pression moindre, typiquement légèrement supérieure à la pression atmosphérique pour les débits utiles, sur une plage de débits variant, selon le réglage du régulateur de débit 34, 35, typiquement, pour les applications médicales, par incréments litre par litre de 0 à 15 litres/minute, comme cela convient pour les masques ou lunettes d'oxygénothérapie en soins à domicile ou en services d'urgences. Les risques de surpression au niveau des sorties 51 et 45 sont supprimés grâce au clapet de surpression 52 qui, dans les conditions sus-mentionnées, est calibré de façon à s'ouvrir lorsque la pression dans l'alésage 23 dépasse par exemple 5 x 10⁵ Pa.

On comprendra, de la description qui précède, que l'ensemble unitaire selon l'invention, typiquement livré avec la bouteille de gaz 4, permet à l'utilisateur de disposer, par simple actionnement en rotation de deux éléments juxtaposés (47, 37) disposés en bout de l'ensemble, et donc aisément accessibles par le haut d'un chapeau ou tulipe de protection de l'ensemble, monté sur la bouteille 4, d'un débit de gaz présélectionné à la demande et en outre, le cas échéant, d'une autre sortie de gaz à moyenne pression convenant en particulier pour les respirateurs en milieu hospitalier et à domicile, la disponibilité du gaz dans la bouteille étant contrôlable en permanence par le manomètre 9. Une fois la réserve de gaz épuisée, l'utilisateur déconnecte l'ensemble de son installation et renvoie la bouteille et son ensemble de commande et de distribution de gaz au fournisseur qui, grâce à un outillage spécial qui lui est propre, peut remplir de nouveau la bouteille simplement, sans démontage de l'ensemble, par le raccord de remplissage 11.

Selon un aspect de l'invention, convenant tout particulièrement aux bouteilles de gaz transportables, les sorties utilitaires 45 et 51 et le manomètre 9 sont disposés, en ligne, d'un même côté de l'ensemble unitaire, en regard d'une ouverture latérale formée dans le chapeau de protection.

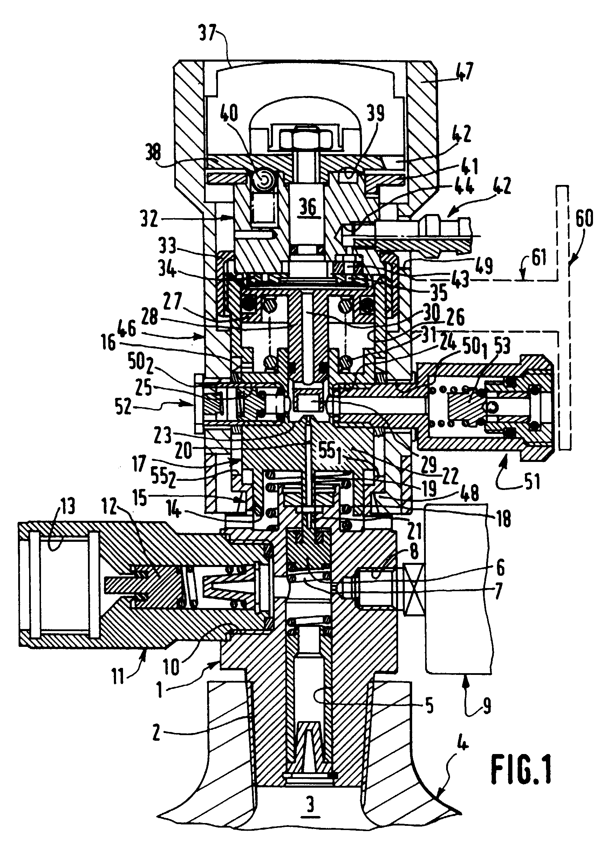

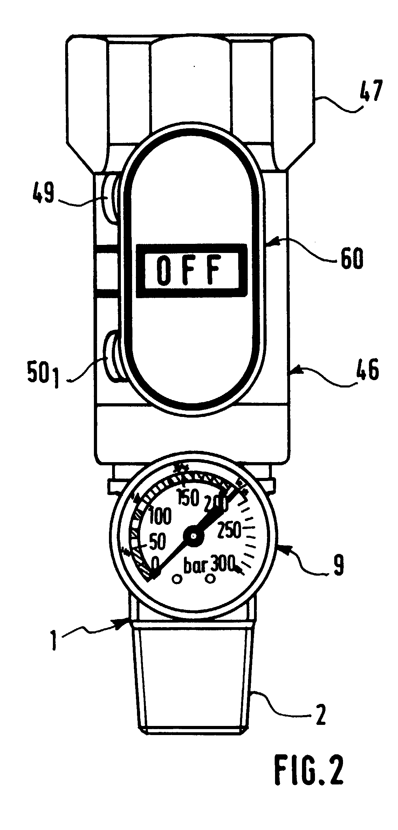

Comme représenté sur la figure 2 et en pointillés sur la figure 1, l'ensemble est alors avantageusement complété par un "drapeau" constitué par un volet 60 solidarisé, via une tige 61, à l'organe tubulaire 46. La tige 61 s'étend entre les raccords 42 et 51, l'embase de la tige 61 se situant entre les zones les plus proches de la partie supérieure 47, ou zones hautes, des lumières 49 et 501, et le volet 60 a une extension longitudinale telle qu'en position de fermeture de l'ensemble, il masque les deux raccords 42 et 51, empêchant ainsi de brancher les tuyaux sur un ensemble "fermé", d'autant que ce volet drapeau occulte, dans cette position, l'essentiel de l'ouverture d'accès formé dans le chapeau de la bouteille. Par contre, en position "d'ouverture" de l'ensemble, le volet, qui permet également l'actionnement de l'organe tubulaire 46, est quasiment entièrement caché dans le chapeau de la bouteille en donnant libre accès aux raccords 42 et 51, garantissant ainsi que les tuyaux s'y raccordant soient connectés à la source de fluide sous pression dans le conteneur, ce qui est important pour les applications médicales. L'essentiel des éléments constitutifs de l'ensemble est réalisé en métal, typiquement en laiton et en acier pour les ressorts, l'organe tubulaire 46, et typiquement le volet 60, étant réalisés en matériau plastique, par exemple un polyamide.

Quoique la présente invention ait été décrite en relation avec un mode de réalisation particulier, elle trouve des applications dans un grand nombre de domaines utilisant des gaz conditionnés sous pression, notamment dans le soudage/coupage.

## Revendications

1. Ensemble de commande et de distribution de gaz, destiné à être raccordé à un réservoir (4) contenant ledit gaz sous une haute pression, comportant une sortie basse pression (45) et, en série entre le réservoir (4) et la sortie basse pression (45), un clapet d'isolation (6) exposé à la haute pression, un moyen détendeur de pression (27, 29) couplable au clapet d'isolation (6), et un moyen régulateur de débit (34, 35), la sortie basse pression (45), le moyen régulateur de débit (34, 35) et le moyen détendeur de pression (27, 29) étant assemblés dans un premier sous-ensemble mobile (32, 17) disposé dans une structure de commande et d'actionnement (46) solidarisée à un deuxième sous-ensemble (1) incorporant le clapet d'isolation (6) et étant destiné à être monté sur le réservoir.

2. Ensemble selon la revendication 1, caractérisé en ce que le premier sous-ensemble (32, 17) comporte une deuxième sortie de gaz moyenne pression (51) en amont du moyen régulateur de débit (34, 35).

3. Ensemble selon la revendication 1 ou la revendication 2, caractérisé en ce que le moyen détendeur de pression (27, 29) est disposé dans un premier bloc (17) coopérant à coulissement avec une première extrémité (14) du deuxième sous-ensemble (1) et comprenant une portion de tige creuse (19) coopérant sélectivement avec le clapet d'isolation (6).

4. Ensemble selon la revendication 3, caractérisé en ce que le moyen régulateur de pression comprend un moyen de piston (27) porte-clapet (29) coulissant dans le premier bloc (17) et coopérant avec un siège de clapet (22) formé dans le premier bloc (17).

5. Ensemble selon la revendication 3 ou la revendication 4, caractérisé en ce que le moyen régulateur de débit (34, 35) et la sortie basse pression (45) sont disposés dans un deuxième bloc (32) monté sur le premier bloc (17).

6. Ensemble selon l'une des revendications 2 à 5, caractérisé en ce que la structure de commande et d'actionnement comporte un organe tubulaire (46) renfermant le premier sous-ensemble (32, 17) et présentant, dans sa paroi latérale, une première (49) et une deuxième (50₁) découpes au travers desquelles s'étendent les sorties basse pression (45) et moyenne pression (51), respectivement.

7. Ensemble selon la revendication 6, caractérisé en ce que le moyen régulateur de débit (34, 35) comporte un organe d'actionnement (37) disposé dans une extrémité d'actionnement (47) de l'espace tubulaire (46).

8. Ensemble selon la revendication 3 et l'une des revendications 6 et 7, caractérisé en ce que la deuxième découpe (50₁) forme un profil de came coopérant avec la sortie moyenne pression (51) pour déplacer axialement le premier sous-ensemble (32, 17) en réponse à une rotation de l'organe tubulaire (46).

9. Ensemble selon la revendication 8, caractérisé en ce qu'il comporte un dispositif de clapet de surpression (52) monté dans le premier bloc (17) et traversant une troisième découpe à profil de came (50₂) formée dans la paroi latérale de l'organe tubulaire (46) et coopérant avec le dispositif de clapet de surpression (52) pour assister le déplacement axial du premier sous-ensemble (32, 17) en réponse à une rotation de l'organe tubulaire (46).

10. Ensemble selon l'une des revendications 5 à 9, caractérisé en ce que le moyen régulateur de débit comporte un disque (34) à trous calibrés (35) positionnable en rotation par rapport au deuxième bloc (32).

11. Ensemble selon l'une des revendications 6 à 10, caractérisé en ce que l'organe tubulaire (46) comporte, à une extrémité, des protubérances radiales (48) reçues dans une gorge périphérique (15) de la première extrémité du deuxième sous-ensemble (1).

12. Ensemble selon l'une des revendications 2 à 11, caractérisé en ce que le deuxième sous-ensemble comprend un troisième bloc tubulaire (1) comportant une deuxième extrémité (2) pourvue de moyens de montage sur le réservoir (4).

13. Ensemble selon la revendication 12, caractérisé en ce que le deuxième sous-ensemble comporte un dispositif de remplissage (11) à clapet anti-retour (12) débouchant, dans le troisième bloc (1) en amont du clapet d'isolation (6) et permettant le remplissage du réservoir (4).

14. Ensemble selon la revendication 12 ou la revendication 13, caractérisé en ce que le deuxième sous-ensemble comporte un manomètre (9) monté dans le troisième bloc (1).

15. Ensemble selon la revendication 14, caractérisé en ce que le manomètre (9), la sortie basse pression (45) et la sortie moyenne pression (51) sont disposés du même côté de l'ensemble.

16. Ensemble selon l'une des revendications 12 à 15, caractérisé en ce que le réservoir est une bouteille de gaz (4), la deuxième extrémité (2) du troisième bloc (1) étant filetée pour son montage dans le col (3) de la bouteille de gaz.

17. Bouteille de gaz équipée d'un ensemble selon l'une des revendications 12 à 16.

18. Bouteille de gaz équipée selon la revendication 17, caractérisée en ce qu'elle contient de l'oxygène médical.

## Claims

1. Gas control and distribution assembly, designed to be connected to a reservoir (4) containing the said gas at a high pressure, including a low pressure outlet (45) and, in series between the reservoir (4) and the low pressure outlet (45), an isolating valve (6) exposed to the high pressure, means for reducing the pressure (27, 29) which can be coupled to the isolating valve (6), and means for regulating the flow (34, 35), the low pressure outlet (45), the means for regulating the flow (34, 35) and the means for reducing the pressure (27, 29) being assembled in a first movable sub-assembly (32, 17) disposed in a control and operating structure (46) attached to a second sub-assembly (1) incorporating the isolation valve (6) and being designed to be mounted on the reservoir.

2. Assembly according to claim 1, characterized in that the first sub-assembly (32, 17) includes a second medium pressure gas outlet (51) upstream from the means for regulating the flow (34, 35).

3. Assembly according to claim 1 or claim 2, characterized in that the means for reducing the pressure (27, 29) are disposed in a first block (17) cooperating in a sliding manner with a first end (14) of the second sub-assembly (1) and including a portion of hollow rod (19) cooperating selectively with the isolating valve (6).

4. Assembly according to claim 3, characterized in that the means for regulating the pressure includes a valve-carrier (29) piston device (27) sliding in the first block (17) and cooperating with a valve seating (22) formed in the first block (17).

5. Assembly according to claim 3 or claim 4, characterized in that the means for regulating the flow (34, 35) and the low pressure outlet (45) are disposed in a second block (32) mounted on the first block (17).

6. Assembly according to one of claims 2 to 5, characterized in that the control and operating structure includes a tubular component (46) enclosing the first sub-assembly (32, 17) and having, in its side wall, a first (49) and a second (50₁) cut-out through which the low pressure outlet (45) and the medium pressure outlet (51) respectively extend.

7. Assembly according to claim 6, characterized in that the means for regulating the flow (34, 35) include an operating device (37) disposed in an operating end (47) of the tubular space (46).

8. Assembly according to claim 3 and either of claims 6 or 7, characterized in that the second cut-out (50₁) forms a cam profile cooperating with the medium pressure outlet (51) for moving the first sub-assembly (32,17) axially in response to a rotation of the tubular device (46).

9. Assembly according to claim 8, characterized in that it includes a pressure release valve (52) mounted in the first block (17) and passing through a third cut-out with a cam profile (50₂) formed in the side wall of the tubular device (46) and cooperating with the pressure release valve device (52) to assist in the axial movement of the first sub-assembly (32,17) in response to a rotation of the tubular device (46).

10. Assembly according to one of claims 5 to 9, characterized in that the means for regulating the flow include a disc (34) with calibrated holes (35) which can be positioned in rotation with respect to the second block (32).

11. Assembly according to one of claims 6 to 10, characterized in that the tubular device (46) has, at one end, radial protuberances (48) received in a peripheral groove (15) of the first end of the second sub-assembly (1).

12. Assembly according to one of claims 2 to 11, characterized in that the second sub-assembly includes a third tubular block (1) having a second end (2) provided with means for mounting on the reservoir (4).

13. Assembly according to claim 12, characterized in that the second sub-assembly includes a filling device (11) with a non-return valve (12) emerging in the third block (1) upstream from the isolating valve (6) and enabling the reservoir (4) to be filled.

14. Assembly according to claim 12 or claim 13, characterized in that the second sub-assembly includes a manometer (9) mounted in the third block (1)

15. Assembly according to claim 14, characterized in that the manometer (9), the low pressure outlet (45) and the medium pressure outlet (51) are disposed on the same side of the assembly.

16. Assembly according to one of claims 12 to 15, characterized in that the reservoir is a gas bottle (4), the second end (2) of the third block (1) being threaded so that it can be mounted into the neck (3) of the gas bottle.

17. Gas bottle equipped with an assembly according to one of claims 12 to 16.

18. Gas bottle equipped according to claim 17, characterized in that it contains medical oxygen.

## Patentansprüche

1. Anordnung zur Regelung und Verteilung von Gas, die mit einem das Gas unter einem hohen Druck enthaltenden Behälter (4) verbindbar ist, umfassend einen Niederdruckauslaß (45) und hintereinander zwischen dem Behälter (4) und dem Niederdruckauslaß (45) ein dem hohen Druck ausgesetztes Absperrventil (6), ein mit dem Absperrventil (6) verbindbares Druckreduziermittel (27, 29) und ein Durchflußregelmittel (34, 35), wobei der Niederdruckauslaß (45), das Durchflußregelmittel (34, 35) und das Druckreduziermittel (27, 29) zu einer ersten, beweglichen Baugruppe (32, 17) zusammengesetzt sind, die in einem Einstell- und Betätigungsmodul (46) angeordnet ist, der einstückig mit einer zweiten Baugruppe (1) ist, die das Absperrventil (6) enthält und auf den Behälter montierbar ist.

2. Anordnung nach Anspruch 1, dadurch gekennzeichnet, daß die erste Baugruppe (32, 17) einen zweiten Mitteldruckgasauslaß (51) stromauf des Durchflußregelmittels (34, 35) umfaßt.

3. Anordnung nach Anspruch 1 oder Anspruch 2, dadurch gekennzeichnet, daß das Druckreduziermittel (27, 29) in einem ersten Block (17) liegt, der verschiebbar mit einem ersten Ende (14) der zweiten Baugruppe (1) zusammenwirkt und einen Bereich mit einer Hohlstange (19) umfaßt, der selektiv mit dem Absperrventil (6) zusammenwirkt.

4. Anordnung nach Anspruch 3, dadurch gekennzeichnet, daß das Druckregelmittel ein Kolbenmittel (27) mit Ventilorgan (29) umfaßt, das in dem ersten Block (17) verschiebbar ist und mit einem in dem ersten Block (17) ausgebildeten Ventilsitz (22) zusammenwirkt.

5. Anordnung nach Anspruch 3 oder 4, dadurch gekennzeichnet, daß das Durchflußregelmittel (34, 35) und der Niederdruckauslaß (45) in einem auf dem ersten Block (17) befestigten zweiten Block (32) angeordnet sind.

6. Anordnung nach einem der Ansprüche 2 bis 5, dadurch gekennzeichnet, daß der Einstell- und Betätigungsmodul ein rohrförmiges Bauteil (46) umfaßt, das die erste Baugruppe (32, 17) umschließt und an seiner Seitenwand eine erste (49) und eine zweite (50₁) Ausnehmung aufweist, die der Niederdruckauslaß (45) bzw. der Mitteldruckauslaß (51) durchgreift.

7. Anordnung nach Anspruch 6, dadurch gekennzeichnet, daß das Durchflußregelmittel (34, 35) eine Bedienungsvorrichtung (37) umfaßt, die in einem Bedienungsendbereich (47) des rohrförmigen Raums (46) angeordnet ist.

8. Anordnung nach Anspruch 3 und einem der Ansprüche 6 und 7, dadurch gekennzeichnet, daß die zweite Ausnehmung (50₁) ein Nockenprofil bildet, das mit dem Mitteldruckauslaß (51) zusammenwirkt, um die erste Baugruppe (32, 17) bei Drehung des rohrförmigen Bauteils (46) axial zu verschieben.

9. Anordnung nach Anspruch 8, dadurch gekennzeichnet, daß sie eine Überdruckventilvorrichtung (52) umfaßt, die in dem ersten Block (17) angeordnet ist und eine dritte Ausnehmung (50₂) mit Nockenprofil durchgreift, die in der Seitenwand des rohrförmigen Bauteils (46) ausgebildet ist und mit der Überdruckventilvorrichtung (52) zusammenwirkt, um die axiale Verschiebung der ersten Baugruppe (32, 17) bei Drehung des rohrförmigen Bauteils (46) zu unterstützen.

10. Anordnung nach einem der Ansprüche 5 bis 9, dadurch gekennzeichnet, daß das Durchflußregelmittel eine Platte (34) mit kalibrierten Löchern (35) umfaßt, die durch Drehung bezüglich des ersten Blocks (32) positionierbar ist.

11. Anordnung nach einem der Ansprüche 6 bis 10, dadurch gekennzeichnet, daß das rohrförmige Bauteil (46) an einem Ende radiale Vorsprünge (48) hat, die in einer Nut am Umfang (15) des ersten Endes der zweiten Baugruppe (1) aufgenommen sind.

12. Anordnung nach einem der Ansprüche 2 bis 11, dadurch gekennzeichnet, daß die zweite Baugruppe einen dritten rohrförmigen Block (1) umfaßt, der ein zweites Ende (2) hat, das mit Mitteln zur Befestigung auf dem Behälter (4) versehen sind.

13. Anordnung nach Anspruch 12, dadurch gekennzeichnet, daß die zweite Baugruppe eine Füllvorrichtung (11) mit Rückschlagventil (12) umfaßt, die in den dritten Block (1) stromauf des Absperrventils (6) mündet und die Befüllung des Behälters (4) ermöglicht.

14. Anordnung nach Anspruch 12 oder Anspruch 13, dadurch gekennzeichnet, daß die zweite Baugruppe ein in dem dritten Block (1) angeordnetes Manometer (9) umfaßt.

15. Anordnung nach Anspruch 14, dadurch gekennzeichnet, daß das Manometer (9), der Niederdruckauslaß (45) und der Mitteldruckauslaß (51) an der selben Seite der Anordnung angeordnet sind.

16. Anordnung nach einem der Ansprüche 12 bis 15, dadurch gekennzeichnet, daß der Behälter eine Gasflasche (4) ist, wobei das zweite Ende (2) des dritten Blocks (1) mit einem Gewinde zur Befestigung im Hals (3) der Gasflasche versehen ist.

17. Mit einer Anordnung nach einem der Ansprüche 12 bis 16 ausgestattete Gasflasche.

18. Gasflasche, ausgestattet nach Anspruch 17, dadurch gekennzeichnet, daß sie medizinischen Sauerstoff enthält.
